# EUROPÄISCHE PATENTSCHRIFT

(11) **EP 2 770 103 B1**
(45) Veröffentlichungstag und Bekanntmachung des Hinweises auf die Patenterteilung: **25.11.2015**
(21) Anmeldenummer: 13004866.3
(22) Anmeldetag: 10.10.2013
(51) Int. Cl.: D06M 13/02, D06M 15/277, D06M 13/224, D06M 23/10, D06M 23/06, D06M 13/144, C09D 133/16, C08F 2/06, C08F 220/18, C08F 220/22, C08F 220/58, C09D 133/10

(54) **Zubereitung für eine Appretur von Flächengebilden**
Composition of a finishing agent for fabrics
Préparation pour un apprêt textile

(30) Priorität: 12.10.2012 DE 102012020053
(43) Veröffentlichungstag der Anmeldung: 27.08.2014
(73) Patentinhaber: Brauns-Heitmann GmbH & Co. KG, 34414 Warburg (DE)
(72) Erfinder: Füser, Katja, 59602 Rüthen (DE); Gibbels, Uwe, 34414 Warburg (DE)
(74) Vertreter: Geskes, Christoph

(56) Entgegenhaltungen:
- EP-A1- 0 527 496
- EP-A1- 0 594 154
- EP-A1- 1 535 966
- EP-A1- 1 632 542
- WO-A1-2008/022985

## Beschreibung

Die vorliegende Erfindung betrifft eine Zubereitung für eine Appretur von Flächengebilden, bevorzugt für die Ausrüstung von Flächengebilden mit imprägnierenden Eigenschaften, als auch eine versprühbare Zusammensetzung, umfassend die erfindungsgemäße Zubereitung.

Die vorliegende Erfindung betrifft insbesondere imprägnierende Zubereitungen und versprühbare Zusammensetzungen für Flächengebilde, vorzugsweise Stoffe und Textilen, auch technischer Art einschließlich Leder- und Schuhwaren, wobei die Imprägnierung vorzugsweise wasserabweisende Eigenschaften aufweisen soll. Weiter bevorzugt soll die erfindungsgemäße Zubereitung und die erfindungsgemäße versprühbare Zusammensetzung schmutz- und/oder ölabwelsende Effekte aufweisen. Besonders bevorzugt soll die erfindungsgemäße Zubereitung und die erfindungsgemäße versprühbare Zusammensetzung sowohl wasserabweisende, als auch schmutz- und/oder ölabweisende Effekte aufweisen.

Es ist bekannt, zur Erzeugung wasserabweisender Effekte Zubereitungen auf Basis von Paraffinen und Silikonen einzusetzen, die ein Hydrophobierung von Textilfasern bewirken. Demgegenüber weisen Zubereitungen mit Fluorcarbonpolymeren zusätzlich schmutz- und/oder ölabweisende Eigenschaften auf.

Fluoarcarbonausrüstungen kommen grundsätzlich für eine große Anzahl von Produkten im Stoff- und Textilbereich in Frage. Sie werden sowohl im Bekleidungs- und Heimtextilienbereich, aber auch im Bereich technischer Textilien eingesetzt. Üblicherweise basieren Fluorcarbonzubereitungen auf Polyurethanen oder Polyacrylaten, die Perfluoaralkylgruppen unterschiedlicher Kettenlänge aufweisen. Die Applikation der aus dem Markt bekannten imprägnierenden Appreturen erfolgt einerseits durch den Endanwender in Form von Waschen oder Besprühen der Leder- und/oder Schuhwaren, Stoffe und/oder Textilien, oder aber bereits bei der Herstellung über das Auszieh- und Foulard-Verfahren durch Sprühen, Schäumen oder Pflatschen, häufig auch in Kombination mit anderen Zusätzen, die die Formbeständigkeit, Waschechtheit et cetera verbessern beziehungsweise vermitteln.

Es hat sich jedoch nun gezeigt, dass die eingesetzten Fluorcarbonpolymer bei ihrem chemischen und/oder biologischen Abbau Substanzen freisetzen, die in der Umwelt sehr schlecht abgebaut werden können. Das gleiche gilt auch für Vorprodukte der bekannten Fluorcarbonpolymere. Üblicherweise weisen die bekannten Fluorcarbonpolymere mindestens 8 perfluorierte Kohlenstoffatome auf. Bei der Suche nach Alternativen zu den bekannten Fluorcarbonpolymeren hat sich jedoch herausgebildet, dass diese dann zwar eine verbesserte Abbaubarkeit beziehungsweise ein verbessertes biologisches und/oder Umweltverhalten aufweisen, jedoch eine erhöhte Toxizität dem gegenüber steht.

Es ist daher Aufgabe der vorliegenden Erfindung, eine Zubereitung als auch eine versprühbare Zusammensetzung zur Verfügung zu stellen, welche einerseits umweltverträglicher ist, andererseits keine gesteigerte oder aber nur eine gering gesteigerte Toxizität gegenüber den bekannten Appreturen aufweist.

Diese Aufgabe wird gelöst durch eine erfindungsgemäße Zubereitung für eine Appretur von Flächengebilden, umfassend
a) mindestens ein Polymer ausgewählt aus einer Gruppe umfassend Poly(meth)acrylate und/oder Polyacrylate mit Resten R, umfassend 4 und/oder 6 endständige perfluorierte Kohlenstoffatome, in einer Menge in einem Bereich von 0,5 Gew.-% bis 2,5 Gew.-%,
b) Butylacetat in einer Menge in einem Bereich von 10 Gew.-% bis 40 Gew.-%,
c) mindestens ein Lösemittel auf Benzinbasis in einer Menge in einem Bereich von 15 Gew.-% bis 35 Gew.-%, sowie
d) mindestens ein alkoholbasiertes Lösemittel, wobei der Alkohol 2, 3, 4, 5 oder 6 Kohlenstoffatome aufweist, in einer Menge in einem Bereich von 35 Gew.-% bis 65 Gew.-%,
wobei die Gewichtsprozente jeweils bezogen sind auf die Gesamtmenge der Zubereitung.

Das Polymer a) ist vorzugsweise in einer Menge in einem Bereich von 0,8 Gew.-% bis 2,2 Gew.-%, weiter bevorzugt in einer Menge in einem Bereich von 1,2 Gew.-% bis 1,9 Gew.-%, bezogen auf die Gesamtmenge der Zubereitung, von der Zubereitung umfasst. Das Butylacetat b) ist vorzugsweise in einer Menge in einem Bereich von 12 Gew.-% bis 38 Gew.-%, weiter bevorzugt in einem Bereich von 14 Gew.-% bis 36 Gew.-%, noch weiter bevorzugt in einer Menge in einem Bereich von 22 Gew.-% bis 28 Gew.-%, jeweils bezogen auf die Gesamtmenge der Zubereitung, von der Zubereitung umfasst. Das Lösemittel auf Benzinbasis ist vorzugsweise in einer Menge in einem Bereich von 20 Gew.-% bis 30 Gew.-%, weiter bevorzugt in einer Menge in einem Bereich von 21,5 Gew.-% bis 28,5 Gew.-%, jeweils bezogen auf die Gesamtmenge der Zubereitung, von der Zubereitung umfasst. Das alkoholbasierte Lösemittel ist vorteilhafterweise in einer Menge in einem Bereich von 38 Gew.-% bis 58 Gew.-%, weiter bevorzugt in einer Menge in einem Bereich von 40 Gew.-% bis 56 Gew.-%, jeweils bezogen auf die Gesamtmenge der Zubereitung, von der Zubereitung umfasst.

Das Polymer a) ist vorzugsweise ausgewählt aus einer Gruppe umfassend Poly(meth)acrylate. Weiter vorteilhafterweise umfasst das Polymer a) Rest R mit 6 endständigen perfluorierten Kohlenstoffatomen. Vorteilhafterweise sind die endständigen, perfluorierten Kohlenstoffatome Bestandteil von Resten R des Polymers a) mit 4 bis 24 Kohlenstoffatomen, weiter bevorzugt mit 8 bis 20 Kohlenstoffatomen, noch weiter bevorzugt mit 8 bis 18 Kohlenstoffatomen, und noch weiter bevorzugt mit 8 bis 12 Kohlenstoffatomen. Die Reste R des Polymers a) sind vorteilhafterweise linear ausgebildet, können jedoch auch verzweigt sein.

Das Polymer a) umfasst weiter vorteilhafterweise Amidgruppen. In einer weiter bevorzugten Ausführungsform der vorliegenden Erfindung umfasst das Polymer a) nichtperfluorierte, lineare und/oder verzweigte Alkylreste mit 2 bis 18 Kohlenstoffatomen, bevorzugt 2 bis 10 Kohlenstoffatomen, noch weiter bevorzugt 2 bis 8 Kohlenstoffatomen. Die Alkylreste des Polymers a) sind bevorzugt linear ausgebildet.

Das Polymer a) ist vorteilhafterweise aus 3 Komponenten A, B und C hergestellt. Komponente A ist dabei vorteilhafterweise ein Methylacrylat mit einem Tridecafluoralkylrest R, wobei der Rest R vorteilhafterweise 8,10 oder 12 Kohlenstoffatome aufweist. Besonders bevorzugt ist die Komponente A ein 3,3,4,4,5,5,6,6,7,7,8,8,8-Tridecafluoroctyl 2-methylacrylat

Bevorzugt ist Komponente B ausgewählt aus einer Gruppe umfassend Methacrylate und/oder Methacrylamide, besonders bevorzugt ein Methacrylamid. Komponente B weist vorzugsweise eine endständige Hydroxygruppe auf, welche über eine kurzkettige Kohlenstoffkette mit dem Acrylamid beziehungsweise Acrylat verbunden ist. Besonders bevorzugt weist die kurzkettige Kohlenstoffkette dabei 1, 2, 3 oder 4 Kohlenstoffatome, besonders bevorzugt 1 oder 2 Kohlenstoffatome auf. Besonders bevorzugt ist Komponente B N-(Hydroxymethyl)-Methacrylamid. Alternativ kann Komponente B auch ein 2-Hydroxyalkylmethacrylat sein, wobei der 2-Hydroxyalkylrest 1 oder 2 Kohlenstoffatome aufweisen kann, so dass besonders bevorzugt 2-Hydroxymethylmethacrylat und/oder 2-Hydroxymethylmethacrylat ist. In einer bevorzugten Ausführungsform kann das Polymer a) gebildet sein aus einem Methacrylamid und einem Methacrylat als Komponente B, wie vorstehend beschrieben.

Die Komponente C ist vorteilhafterweise ein Acrylsäureester, bevorzugt ein Methacrylsäureester, weiter bevorzugt ein Alkylmethacrylsäureester mit einem Akylrest, der vorzugsweise 2 bis 24 Kohlenstoffatome, bevorzugt 2 bis 18 Kohlenstoffatome, weiter bevorzugt 2 bis 10 Kohlenstoffatome, aufweist Der Alkylrest ist dabei vorzugsweise linear ausgebildet, kann jedoch auch verzweigt ausgebildet sein.

Überraschenderweise hat sich gezeigt, dass die erfindungsgemäße Zubereitung, wie vorstehend beschrieben, einen Inhalations-Toxizitäts-Test (acute inhalation toxicity study gemäß der OECD Richtlinie für die Prüfung von Chemikalien 403 vom 07.09.2009), mit welchem die Toxizität des Appreturmittels an Ratten über vier Stunden ermittelt wird, wie dieser beispielsweise durch die Firma TNO triskelion bv, Zeist, Niederlande, durchgeführt wird, besteht, das heißt eine nur geringe Toxizität aufweist, zumindest jedoch eine Toxizität, die nicht gesteigert ist im Vergleich zu den bekannten Zubereitungen, die Reste R mit mindestens 8 insbesondere endständige perfluorierte Kohlenstoffatome aufweisen. Gleichzeitig ist die erfindungsgemäße Zubereitung jedoch unter Umweltaspekten erheblich verträglicher als die bekannten Zubereitungen mit Resten R mit mindestens 8 perfluorierten Kohlenstoffatomen, da diese besser chemisch beziehungsweise biologisch abbaubar ist, ebenso wie die Vorprodukte des Polymers a) (die Komponenten A, B und C).

Mit ursächlich dürfte hierfür die Lösemittelmischung gemäß den Bestandteilen b) bis d) sein. Die Lösemittelmischung gemäß der erfindungsgemäßen Zubereitung weist vorteilhafterweise einen relativ hohen Anteil höher siedender Lösungsmittel auf, welche offensichtlich aufgrund einer günstigeren Teilchengrößenverteilung der an sich erhöhten Toxizität von Fluorcarbonpolymers mit Resten R mit 4 beziehungsweise 6 Fluoratomen gegenüber den bekannten Fluorcarbonpolymeren mit Resten R mit 8 Fluoratomen entgegenwirkt.

Das Lösemittel c) auf Benzinbasis ist vorteilhafterweise ein Benzin, umfassend paraffinische und naphthenische Kohlenwasserstoffe, weiter bevorzugt ein Benzin mit Kohlenstoffen mit 5 bis 10, weiter bevorzugt 6 bis 8 Kohlenstoffatomen. Das Benzin umfasst vorteilhafterweise Hexane, Heptane, Oktane, Cyclohexan und/oder Cycloheptan. Dabei umfasst der Begriff Hexan, Heptan, Oktan, Cyclohexan und Cyclohepthan auch Isomere derselben, beispielsweise 1,3-Dimethylcyclohexan, Methylhexan oder Methylheptan. Besonders bevorzugt weist das Lösemittel c) auf Benzinbasis einen Siedepunktbereich zwischen 70 °C und 130 °C, bevorzugt zwischen 80 °C und 110 °C, auf.

Das alkoholbasierte Lösemittel d) der erfindungsgemäßen Zubereitung ist vorteilhafterweise ausgewählt aus einer Gruppe umfassend Ethanol, Propanol und/oder Butanol als auch deren Isomere. Besonders bevorzugt ist das alkoholbasierte Lösemittel d) 2-Propanol.

Die vorliegende Erfindung betrifft weiterhin eine versprühbare Zusammensetzung, umfassend die erfindungsgemäße Zubereitung und mindestens ein ein Aerosol bildendes Mittel. Vorteilhafterweise ist das das Aersol bildende Mittel mindestens ein gasförmiger Kohlenwasserstoff, bevorzugt mit 3 oder 4 Kohlenstoffatomen. Besonders bevorzugt ist das das Aerosol bildende Mittel ausgewählt aus einer Gruppe umfassend Propan und/oder Butan, und ist vorzugsweise eine Mischung aus Propan und Butan. Das Butan kann dabei auch ein iso-Butan sein. Besonders bevorzugt sind Mischungen von Propan, Butan und iso-Butan. In einer Mischung ist vorteilhafterweise maximal 20 Gew.-% Propan, maximal 80 Gew.-% iso-Butan und/oder maximal 10 Gew.-% Butan enthalten, wobei die Gewichtsprozente bezogen sind auf die Gesamtmenge des Aerosol bildenden Mittels.

Die erfindungsgemäße Zusammensetzung umfasst vorteilhafterweise die erfindungsgemäße Zubereitung in einer Menge in einem Bereich von 50 Gew.-% bis 85 Gew.-%, weiter bevorzugt in einer Menge in einem Bereich von 55 Gew.-% bis 65 Gew.-%, jeweils bezogen auf die Gesamtmenge der Zusammensetzung.

Die erfindungsgemäße versprühbare Zusammensetzung weist die gleichen vorteilhaften Eigenschaften wie die erfindungsgemäße Zubereitung auf, das heißt deren Toxizität ist gegenüber bekannten Fluorcarbonpolymeren mit Resten R mit 8 Fluoratomen zumindest nicht stark erhöht, so dass ein Inhalations-Toxizitäts-Test bestanden ist, als auch sind die Bestandteile der erfindungsgemäßen versprühbaren Zusammensetzung umweltverträglich, insbesondere abbaubar, einschließlich deren Vorprodukte.

Besonders bevorzugt liegt der durchschnittliche Wert für mᵣₑₛₚ gemäß EN 481 in einem Bereich von 3 mg bis 4,6 mg bei Erzeugung eines Aerosols mit der erfindungsgemäßen Zusammensetzung, und liegt vorteilhafterweise in einem Bereich von 3,2 mg bis 4,4 mg, weiter bevorzugt in einem Bereich von 3,25 mg bis 4,2 mg. Mittels einer Teilchengrößenbestimmung nach dem europäischen Standard EN 481 wird mit mᵣₑₛₚ die einatmenbare Menge ("respirable") der versprühbaren Zusammensetzung bestimmt. Daneben wird mit diesem Test auch die inhalierbare ("inhalable") Menge mᵢₙₕ als auch die thorakale ("thoracic") Menge mₜₕₒᵣ bestimmt. Die Teilchengrößenbestimmung Insbesondere für die einatembare Menge ist ein indirekter Hinweis auf die Toxizität der versprühbaren Zusammensetzung. Die erfindungsgemäße Zusammensetzung weist vorteilhafterweise einen durchschnittlichen Wert für mᵢₙₕ in einem Bereich von 10 mg bis 12 mg, weiter bevorzugt in einem Bereich von 10,5 mg bis 11,9 mg, und einen durchschnittlichen Wert für mₜₕₒᵣ in einem Bereich von 7 mg bis 10 mg, weiter bevorzugt in einem Bereich von 7,8 mg bis 9,5 mg bei Erzeugung eines Aerosols mit der erfindungsgemäßen Zusammensetzung auf.

Besonders niedrige Werte für mᵣₑₛₚ werden vorteilhafterweise erhalten, wenn die Menge an Butylacetat b) in einem Bereich von 15 Gew.-% bis 35 Gew.-%, weiter bevorzugt in einem Bereich von 22 Gew.-% bis 28 Gew.-% liegt.

Die vorstehenden durchschnittlichen Werte für mᵣₑₛₚ, mᵢₙₕ und mₜₕₒᵣ wurden ermittelt unter Einsatz eines "RESPICON"-Personalaerosolmonitors der Helmut Hund GmbH, Wetzlar, Deutschland, wie dieser auch beschrieben ist in W. Koch, W. Dunkhorst, H. Lödding: Design and performance of a new personal aerosol monitor, Aerosol Sci. Technol., 31:231-246, 1999, der mit einem Fluss von 3,1 l/min. arbeitet. In diesem Aerosolmonitor ist ein Filter angeordnet, der vorteilhafterweise ein mit Teflon beschichteter Glasfilter mit einem Durchmesser von 38 mm ist, auf welchen sich die abgeschiedenen Teilchen ansammeln und anschließend gravimetrisch bestimmt werden mit einer geeigneten Waage.

Vor der gravimetrischen Analyse wurden dabei die Filter mit den abgeschiedenen Teilchen für einen Zeitraum von 10 Stunden bei einer relativen Luftfeuchtigkeit von 40 % equilibriert. Hierdurch können nur die nicht verdampfbaren Polymerbestandteile des Polymers a) bestimmt werden. Die Durchschnittswerte wurden ermittelt, indem fünf Mal für jeweils 5 Sekunden ein Sprühstoß der versprühbaren erfindungsgemäßen Zusammensetzung in die Testkammer des Aerosolmonitors gegeben wurde. Nach jeder Messung wurde der Gewichtsverlust bestimmt, so dass ein durchschnittlicher Massenverlust des Sprühprozesses ermittelbar ist, aus welchem dann die durchschnittlichen Werte mᵣₑₛₚ, mᵢₙₕ und mₜₕₒᵣ ermittelt wurden. Nach 20 Minuten wurde die Sprühkammer mit Frischluft gespült, und anschließend die fünf Sprühstöße für jeweils 5 Sekunden wiederholt. Anschließend wurden die Filter dem Aerosolmonitor entnommen und deren Gewicht, wie vorstehend beschrieben, zur Ermittlung der nicht verdampfbaren Anteile des Polymers a) bestimmt.

Die vorliegende Erfindung betrifft weiterhin die Verwendung der erfindungsgemäßen Zubereitung und der erfindungsgemäßen versprühbaren Zusammensetzung in einem Imprägnierspray beziehungsweise als Imprägnierspray für Stoffe und Textilien, einschließlich Leder- und/oder Schuhwaren.

Die Erfindung wird anhand der nachfolgenden Versuche nähergehend erläutert.

Es wurden drei Zubereitungen 1 bis 3 gemäß der nachfolgenden Tabelle hergestellt:

| | **Zubereitung 1** | **Zubereitung 2** | **Zubereitung 3** |
|---|---|---|---|
| 2-Propanol (d)) | 48,333 | 55,333 | 41,333 |
| Butylacetat (b)) | 25 | 15 | 35 |
| Benzin (c)) | 25 | 28 | 22 |
| Polymer a) | 1,667 | 1,667 | 1,667 |

Als Benzin wurde eingesetzt das Spezialbenzin 80/110 der Brenntag GmbH, Mülheim an der Ruhr, Deutschland, welches ein Kohlenwasserstoffgemisch aus paraffinischen und naphtalinischen Kohlenwasserstoffen mit 6 bis 8 Kohlenstoffatomen ist. Als Polymer a) wurde das Fluorcarbonpolymer RUCO 1016 der Firma Rudolf GmbH, Geretsried, Deutschland eingesetzt, ein Polymer auf Basis eines Polymethacrylates, welches Reste R mit 6 endständige perfluorierten Kohlenstoffatomen in einem Alkylrest mit 8 Kohlenstoffatomen als auch Amidgruppen umfasst.

60 Gew.-% dieser Zubereitungen wurden dann mit 40 Gew.-% eines Gemisches aus Propan und Butan mit maximal 20 Gew.-% Propan, maximal 80 Gew.-% iso-Butan und maximal 10 Gew.-% Butan als Aerosol bildendes Mittel zur Bildung einer versprühbaren Zusammensetzung zusammengeführt. Dabei ergibt sich beispielsweise für die Zubereitung 1 bezogen auf die versprühbare Zusammensetzung eine Menge an 2-Propanol von 29 Gew.-%, eine Menge von Butylacetat von 15 Gew.-%, eine Menge des benzinhaitigen Lösemittels von 15 Gew.-%, eine Menge des Polymers a) von 1 Gew.-% bei im Übrigen 40 Gew.-% Aerosol bildendem Mittel, jeweils bezogen auf die Gesamtmenge der Zusammensetzung.

Mit diesen drei erhaltenen versprühbaren Zusammensetzungen wurde dann der inhalations-toxische Text in Übereinstimmung mit dem europäischen Standard EN 481, wie vorstehend in der Beschreibung wiedergegeben, durchgeführt, und mit diesem die in der folgenden Tabelle enthaltenen Ergebnisse erzielt:

| | mᵣₑₛₚ [mg] | mₜₕₒᵣ [mg] | mᵢₙₕ [mg] |
|---|---|---|---|
| Zusammensetzung 1 | 3.4 | 8.0 | 11.0 |
| Zusammensetzung 2 | 4.2 | 8.5 | 11.7 |
| Zusammensetzung 3 | 3.9 | 9.2 | 11.6 |

Aus der vorstehenden Tabelle wird ersichtlich, dass die versprühbare Zusammensetzung 1 mit der Zubereitung 1 die niedrigsten und damit besten durchschnittlichen Werte mᵣₛₚ, mₜₕₐᵣ und mᵢₙₕ liefert. Diese durchschnittlichen Werte für die Zusammensetzung 1, aber auch für die Zusammensetzungen 2 und 3 liegen teilweise erheblich unter denjenigen von Imprägniermitteln, die Polymere mit Rest R mit 8 perfluorierten Kohlenstoffatomen aufweisen. So liegen für derartige aus dem Markt bekannte Imprägniermittel die durchschnittlichen Werte für mᵣₛₚ bei über 5 mg, für mᵣₕₒᵣ bei über 15 mg, und für mᵢₙₕ bei über 16 mg.

Darüber hinaus wurde ein Spraytest (Regentest) in Übereinstimmung mit der Norm AATCC 22:1996 durchgeführt. Bei diesem Test werden die versprühbaren Zusammensetzungen auf genormte Lederstücke aufgebracht, diese Lederstücke schräg eingespannt und von oben portionsweise mit Wasser berieselt. Nach jeder Berieselung mit 250 ml Wasser wird anhand eines Referenzmusters der Benetzungsgrad der Oberfläche visuell ermittelt. Ein Wert von 100 % bedeutet dabei nicht, dass 100 % der Fläche des genormten Lederstückes benetzt ist, sondern, dass 100 % des benetzten Lederstückes nicht mit Wasser benetzt ist. Ein Wert von 100 % stellt damit die bestmögliche Bewertung dar.

Zur Durchführung dieses Spraytests wurden versprühbare Zusammensetzungen eingesetzt, welche unterschiedliche Gehalte an Polymer a) aufwiesen. Die versprühbare Zusammensetzung wies dabei in Übereinstimmung mit der versprühbaren Zusammensetzung 1 1 Gew.-% Polymer a) in der versprühbaren Zusammensetzung auf. Darüber hinaus wurden versprühbare Zusammensetzungen mit 1,5 Gew.-% Polymer a), 2,0 Gew.-% Polymer a) und 3,0 Gew.-% Polymer a), wobei die Gewichtsprozente jeweils bezogen sind auf die versprühbare Zusammensetzung, getestet. Der Anteil an dem Benzin basierten Lösemittel c) als auch dem Butylacetat b) wurde dabei gemäß der versprühbaren-Zusammensetzung 1 oben beibehalten, hingegen der Anteil des alkoholbasierten Lösemittels 2-Propanol d) und des Benzins c) proportional entsprechend gesenkt, der Anteil an Butylacteat b) wurde beibehalten.

Alle versprühbaren Zusammensetzungen wiesen im Vergleich zum Prüfstück eine viel bessere Bewertung auf. Besonders hervorzuheben ist, dass die versprühbare Zusammensetzung 1 mit 1 Gew.-% des Polymers a) die besten Ergebnisse unter den getesteten versprühbaren Zusammensetzungen im Spraytest zeigt. Insbesondere führt eine Erhöhung auf 2 Gew.-% beziehungsweise auf 3 Gew.-% des Polymers a) nicht zu besseren Ergebnissen, sondern scheint die Leistungsfähigkeit der versprühbaren Zusammensetzung sogar zu verringern.

In der versprühbaren Zusammensetzung ist damit erfindungsgemäß vorteilhafterweise das Polymer a) in einer Menge in einem Bereich von 0,8 Gew.-% bis 1,8 Gew.-% einzusetzen.

Vorteilhafterweise weist die erfindungsgemäße Zubereitung als auch die erfindungsgemäße versprühbare Zusammensetzung keine weiteren Bestandteile als die Bestandteile a) bis d) auf.

## Patentansprüche

1. Zubereitung für eine Appretur von Flächengebilden, umfassend
a) mindestens ein Polymer, ausgewählt aus einer Gruppe umfassend Poly(meth)acrylate und/oder Polyacrylate mit Resten R, umfassend 4 und/oder 6 endständige perfluorierte Kohlenstoffatome, in einer Menge in einem Bereich von 0,5 Gew.-% bis 2,5 Gew.-%,
b) Butylacetat in einer Menge in einem Bereich von 10 Gew.-% bis 40 Gew.-%,
c) mindestens ein Lösemittel auf Benzinbasis in einer Menge in einem Bereich von 15 Gew.-% bis 35 Gew.-%, sowie
d) mindestens ein alkoholbasiertes Lösemittel, wobei der Alkohol 2, 3, 4, 5 oder 6 Kohlenstoffatome aufweist, in einer Menge in einem Bereich von 35 Gew.-% bis 65 Gew.-%,
wobei die Gewichtsprozente jeweils bezogen sind auf die Gesamtmenge der Zubereitung.

2. Zubereitung gemäß Anspruch 1, **dadurch gekennzeichnet, dass** die endständigen, perfluorierten Kohlenstoffatome Bestandteil von Resten R des Polymers a) mit 4 bis 24 Kohlenstoffatomen sind.

3. Zubereitung gemäß einem der vorhergehenden Ansprüche, **dadurch gekennzeichnet, dass** das Polymer a) Amidgruppen umfasst.

4. Zubereitung gemäß einem der vorhergehenden Ansprüche, **dadurch gekennzeichnet, dass** das Polymer a) nichtperfluorierte, lineare und/oder verzweigte Alkylreste mit 2 bis 18 Kohlenstoffatomen umfasst.

5. Versprühbare Zusammensetzung, umfassend die Zubereitung gemäß einem der Ansprüche 1 bis 4 und mindestens ein Aerosol bildendes Mittel.

6. Zusammensetzung gemäß Anspruch 5, **dadurch gekennzeichnet, dass** das Aerosol bildende Mittel mindestens ein gasförmiger Kohlenwasserstoff, bevorzugt mit 3 oder 4 Kohlenstoffatomen, ist.

7. Zusammensetzung gemäß Anspruch 5 oder 6, **dadurch gekennzeichnet, dass** diese die Zubereitung in einer Menge in einem Bereich von 50 Gew.-% bis 85 Gew.-%, bezogen auf die Gesamtmenge der Zusammensetzung, umfasst.

8. Zusammensetzung gemäß einem der Ansprüche 5 bis 7, **dadurch gekennzeichnet, dass** der durchschnittliche Wert für mᵣₑₛₚ gemäß EN 481 in einem Bereich von 3 mg bis 4,6 mg liegt bei Erzeugung eines Aerosols mit der Zusammensetzung.

## Claims

1. Preparation for a dressing for sheet materials, comprising
a) at least one polymer, selected from a group comprising poly(meth)acrylates and/or polyacrylates with radicals R, comprising 4 and/or 6 terminal perfluorinated carbon atoms, in an amount in a range of from 0.5 wt.% to 2.5 wt.%,
b) butylacetate in an amount in a range of from 10 wt.% to 40 wt.%,
c) at least one petroleum-based solvent in an amount in a range of from 15 wt.% to 35 wt.%, and
d) at least one alcohol-based solvent, wherein the alcohol exhibits 2, 3, 4, 5 or 6 carbon atoms, in an amount in a range of from 35 wt.% to 65 wt.%,
wherein the percentages by weight are in each case related to the total amount of the preparation.

2. Preparation according to claim 1, **characterised in that** the terminal perfluorinated carbon atoms are part of radicals R of the polymer a) with 4 to 24 carbon atoms.

3. Preparation according to any of the preceding claims, **characterised in that** the polymer a) comprises amide groups.

4. Preparation according to any of the preceding claims, **characterised in that** the polymer a) comprises non-perfluorinated, linear and/or branched alkyl radicals with 2 to 18 carbon atoms.

5. Sprayable composition, comprising the preparation according to one of claims 1 to 4 and at least one aerosol-forming agent.

6. Composition according to claim 5, **characterised in that** the aerosol-forming agent is at least one gaseous hydrocarbon, preferably with 3 or 4 carbon atoms.

7. Composition according to claim 5 or 6, **characterised in that** this comprises the preparation in an amount in a range of from 50 wt.% to 85 wt.%, related to the total amount of the composition.

8. Composition according to any of claims 5 to 7, **characterised in that** the average value for mᵣₑₛₚ according to EN 481 lies in a range of from 3 mg to 4.6 mg when an aerosol is produced with the composition.

## Revendications

1. Préparation pour un apprêt textile, comprenant
a) au moins un polymère, choisi dans un groupe comprenant des poly(méth)acrylates et/ou des polyacrylates avec des radicaux R, comprenant 4 et/ou 6 atomes de carbone perfluorés en position terminale, en une quantité située dans une plage de 0,5 % en poids à 2,5 % en poids,
b) de l'acétate de butyle en une quantité située dans une plage de 10 % en poids à 40 % en poids,
c) au moins un solvant à base d'essence en une quantité située dans une plage de 15 % en poids à 35 % en poids, ainsi que
d) au moins un solvant à base l'alcool, dans lequel l'alcool présente 2, 3, 4, 5 ou 6 atomes de carbone, en une quantité située dans une plage de 35 % en poids à 65 % en poids,
dans laquelle les pourcentages pondéraux sont chaque fois rapportés à la quantité totale de la préparation.

2. Préparation selon la revendication 1, **caractérisée en ce que** les atomes de carbone perfluorés en position terminale sont un composant de radicaux R du polymère a) avec 4 à 24 atomes de carbone.

3. Préparation selon l'une quelconque des revendications précédentes, **caractérisée en ce que** le polymère a) comprend des groupes amide.

4. Préparation selon l'une quelconque des revendications précédentes, **caractérisé en ce que** le polymère a) comprend des radicaux alkyle non perfluorés, linéaires et/ou ramifiés, avec 2 à 18 atomes de carbone.

5. Composition pulvérisable, comprenant la préparation selon l'une quelconque des revendications 1 à 4 et au moins un agent formant un aérosol.

6. Composition selon la revendication 5, **caractérisée en ce que** l'agent formant un aérosol est au moins un hydrocarbure gazeux, de préférence avec 3 ou 4 atomes de carbone.

7. Composition selon la revendication 5 ou 6, **caractérisée en ce que** celle-ci comprend la préparation en une quantité située dans une plage de 50 % en poids à 85 % en poids, rapportée à la quantité totale de la composition.

8. Composition selon l'une quelconque des revendications 5 à 7, **caractérisée en ce que** la valeur moyenne de mᵣₑₛₚ selon EN 481 se situe dans une plage de 3 mg à 4, 6 mg lors de la production d'un aérosol avec la composition.
